# EUROPÄISCHE PATENTSCHRIFT

(11) **EP 2 679 923 B1**
(45) Veröffentlichungstag und Bekanntmachung des Hinweises auf die Patenterteilung: **22.04.2020**
(21) Anmeldenummer: 13173949.2
(22) Anmeldetag: 27.06.2013
(51) Int. Cl.: F24F 5/00, F24D 3/14, F16L 3/22, F16L 3/223

(54) **Vorrichtung zum Klimatisieren eines Raumes**
Method for air conditioning a room
Dispositif de climatisation d'une pièce

(30) Priorität: 27.06.2012 AT 502542012
(43) Veröffentlichungstag der Anmeldung: 01.01.2014
(73) Patentinhaber: KE KELIT Kunststoffwerk Gesellschaft m.b.H., 4020 Linz (AT)
(72) Erfinder: Ratschmann, Elmar, 4201 Hellmonsödt (AT)
(74) Vertreter: Hübscher & Partner Patentanwälte GmbH

(56) Entgegenhaltungen:
- EP-A1- 2 466 028
- EP-A2- 1 207 354
- DE-A1- 10 253 867
- DE-A1-102009 000 612
- DE-U1-202005 001 921
- LU-A1- 81 400

## Beschreibung

Die Erfindung betrifft eine Vorrichtung zum Klimatisieren eines Raumes mit wenigstens einem einer Raumfläche zugeordneten, von einem Wärmeträgerfluid durchströmten, insbesondere unterhalb oder in einer Raumdecke bzw. in einem Fußbodenangeordneten, von einer Rohrleitung gebildeten, Wärmetauscher, wobei die wenigstens eine Rohrleitung an quer zur Rohrleitungsachse ausgerichteten und der Raumfläche zugeordneten Halteprofilen befestigt ist, die in Profillängsrichtung eine Mehrzahl an Aufnahmen für die die wenigstens eine Rohrleitung aufweisen und wobei je wenigstens zwei einem Wärmetauscher zugeordnete Halteprofile in einem Abstand entlang der Rohrachse vorgesehen sind, der von an den Halteprofilen anschlagbaren Abstandshaltern festgelegt ist, die in die Aufnahmen, vorzugsweise schnappverschlussartig, eingreifen.

Eine derartige Vorrichtung ist aus der DE 10 2009 000612 A1 bekannt.

Eine weitere bekannte Kühldecke (DE 20011751 U1) umfasst ein Deckenelement mit einer Mineralfaserplatte und einer Gipsplatte, in die eine Nut eingebracht ist, in die ein Temperiermittelschlauch eingelegt ist. Die Gipsplatte ist an der Vorder- und an ihrer Rückseite formschlüssig mit Mineralfaserplatten verbunden. Diese derart aufgebauten Wärmetauscherplatten werden unterhalb der Decke aufgehängt und von einem Wärmeträgerfluid durchströmt und dienen zum Klimatisieren von Räumen, wobei ihnen gegenüber von auf Umluftsystemen basierenden Klimaanlagen der Vorteil zueigen ist, dass praktisch kein unangenehmer Luftzug entsteht und ein angenehmes zugfreies Raumklima geschaffen werden kann. Allerdings ist diesen vorbekannten Deckenelementen der Nachteil zueigen, dass sie verhältnismäßig aufwendig zu fertigen sind und dass diese an einer Baustelle nicht im gewünschten Maße an eventuelle bauliche Gegebenheiten angepasst werden können, da eine Veränderung der Deckenelementgröße vor Ort nicht möglich ist.

Weiters ist es bekannt in Decken selbst, insbesondere in Betondecken, Wärmetauscher in Form von Rohrschlagen einzubetonieren, womit bei einem einfachen Auf-bau eine gute Anpassbarkeit an innenarchitektonische Gegebenheiten gewährleistet werden kann. Derartige Vorrichtungen haben allerdings den Nachteil, dass stets die gesamte Decke und gegebenenfalls auch der darüberliegende Fußboden mitgekühlt wird, was zusätzliche aufwendige Isolationsarbeiten am darüberliegenden Fußboden erforderlich macht. Zudem sind diese Vorrichtungen an einer Baustelle aufwendig zu verlegen und anzuordnen, da die Rohre Haltepunkt für Haltepunkt an einem Traggitter verdrahtet werden müssen.

Ausgehend von einem Stand der Technik der vorgeschilderten Art liegt der Erfindung die Aufgabe zugrunde, eine Vorrichtung zum Klimatisieren eines Raumes zu schaffen, die sich durch eine gute Anpassbarkeit an architektonische Gegebenheiten auszeichnet und die rasch und einfach aufgebaut werden können soll. Die erfindungsgemäße Vorrichtung soll insbesondere die einfache Gewährleistung eines definierten Abstandes der Rohre zu einer zugeordneten Raumfläche ermöglichen.

Die Erfindung löst diese Aufgabe dadurch, dass die Abstandshalter der Aufnahme zugeordnete Haltebereiche aufweisen, die axial von Anschlägen begrenzt sind, deren Außendurchmesser größer als der Aufnahmedurchmesser ist und deren Axialabstand der Profilbreite entspricht.

Um ein erfindungsgemäße Vorrichtung problemlos in kurzer Zeit werkseitig oder an Baustelle zusammenzusetzen braucht beispielsweise lediglich das Grundgerüst aus Halteprofilen und Abstandhaltern an der gewünschten Stelle verlegt und gegebenenfalls fixiert werden. Beispielswese werden die Haltprofile auf eine Schalung aufgelegt und die Abstandshalter in die Aufnahmen eingesetzt. In Weiterer Folge kann die Rohrleitung in die Aufnahmen eingesetzt werden. Dazu kann ein Rohr mäander-förmig am Grundgerüst verlegt werden oder aber können auch mehrere einzelne Rohre parallel auf diesem angeordnet werden. Die Rohre können einfach und rasch exakt im gewünschten Abstand verlegt werden. Zudem ist durch die Halteprofile gewährleistet, dass die Rohre nach einem Eingießen in Beton od. dgl. alle im gleichen, konstanten Abstand zur Raumfläche angeordnet sind. Gleiches gilt, wenn der Wärmetauscher nicht in Beton od. dgl. eingegossen, sondern beispielsweise freiliegend unter oder neben der Raumfläche angeordnet ist. Die Abstandhalter können nach einem Aufbau des Wärmetauschers an diesem verbleiben, oder aber auch wieder von den Halteprofilen gelöst und abgenommen werden.

Um den Manipulationsaufwand beim Herstellen des Wärmetauschers so gering wie möglich zu halten, wird vorgeschlagen, dass die Aufnahmen die Rohrleitung schnappverschlussartig in den das Rohr wenigstens um den halben Rohrmantelumfang umgreifenden Aufnahmen aufnehmen. Ebenso können die Abstandhalter in die Aufnahmen, vorzugsweise schnappverschlussartig eingreifen, wobei die Abstandshalter der Aufnahme zugeordnete Haltebereiche aufweisen, die axial von Anschlägen begrenzt sind, deren Außendurchmesser größer als der Aufnahmedurchmesser ist und deren Axialabstand der Profilbreite entspricht. Damit ist der Abstand der einzelnen Halteprofile zueinander mit wenigen Handgriffen exakt einstellbar und zudem auch gleich festgelegt.

Als Profilform für das Halteprofil empfiehlt es sich, wenn die Halteprofile einen C-profilförmigen Querschnitt aufweisen, deren Rückenschenkel im Bereich zwischen zwei benachbarten Aufnahmen durchbrochen ist. Zudem können die Halteprofile einen C-profilförmigen Querschnitt aufweisen, deren Seitenschenkel im Bereich zwischen zwei benachbarten Aufnahmen zum Rückenschenkel hin eingezogen sind. Damit kann ein sicherer und guter Halt der Rohre bei gleichzeitig geringstmöglicher Kontaktfläche zwischen Halteprofil und Raumfläche gewährleistet werden. Die skizzierte Ausgestaltung des Profils erlaubt zudem eine saubere Umströmung des Profils mit Beton od. dgl. beim Eingießen der Wärmetauscher.

Um nicht übermäßige Längen an Abstandshaltern vorsehen zu müssen, aber dabei dennoch hinsichtlich der Baulänge des Wärmetauschers nicht beschränkt zu sein, empfiehlt es sich, wenn zwischen zwei Rohre aufnehmenden Aufnahmen an einem Halteprofil wenigstens zwei Aufnahmen vorgesehen sind, in welche Abstandshalter eingesetzt sind.

Sind die Aufnahmen von Seitenschenkeln des Halteprofils ausgebildet, wobei in Profillängsrichtung benachbarte Aufnahmeöffnungen abwechselnd gegenüberliegenden Profilseiten zugeordnet sind, so eignet sich das erfindungsgemäße Halteprofil für den Einsatz bei Deckenkühlungen und bei Fußbodenheizungen gleichermaßen. Für die unterschiedlichen Anwendungsfälle ist das Halteprofil lediglich um 180° um die Schienenlängsachse zu drehen. Damit ist gewährleistet, dass der erforderliche Abstand der Wärmetauscherrohre zur Raumfläche eingehalten wird.

Um die Halteprofile beliebig verlängern zu können weisen die Halteprofile an ihren gegenüberliegenden Profilenden einerends Rastansätze und anderends mit den Rastansätzen zusammenwirkende Halteansätze aufweist.

In der Zeichnung ist die Erfindung anhand eines Ausführungsbeispiels schematisch dargestellt. Es zeigen
- Fig. 1: einen Ausschnitt einer erfindungsgemäßen Vorrichtung in Draufsicht,
- Fig. 2: einen vergrößerten Ausschnitt der Vorrichtung aus Fig. 1 in teilgeschnittener Seitenansicht,

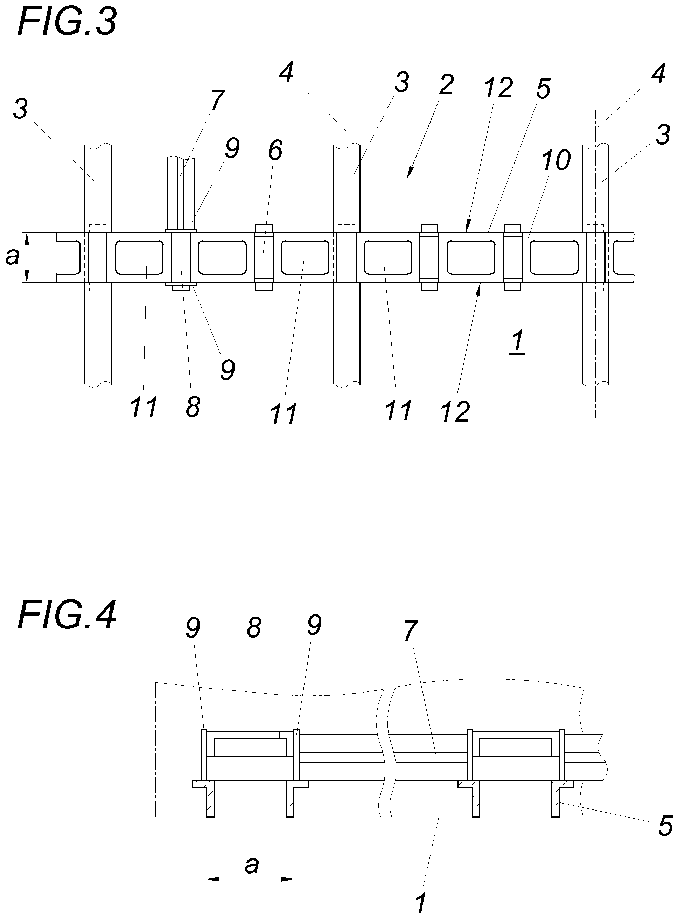

- Fig. 3: die Vorrichtung aus Fig. 2 in Draufsicht und
- Fig. 4: die Vorrichtung aus Fig. 2 im Schnitt nach der Linie IV-IV
- Fig. 5: eine Konstruktionsvariante in teilgeschnittener Seitenansicht und
- Fig. 6: die verkleinerte Variante aus Fig. 5 in Draufsicht.

Eine erfindungsgemäße Vorrichtung zum Klimatisieren eines Raumes umfasst wenigstens einen einer Raumfläche 1, insbesondere einer Raumdecke, -wand od. dgl., zugeordneten, von einem Wärmeträgerfluid durchströmten, insbesondere unterhalb oder in der Raumdecke, -wand od. dgl. angeordneten, Wärmetauscher 2, der von einer Rohrleitung 3 gebildet ist. Die mäanderförmig verlegte Rohrleitung ist zur einfacheren Montage im Bereich parallel zueinander verlaufender, benachbarter Rohr-abschnitte an quer zur Rohrleitungsachse 4 ausgerichteten und der Raumdecke 1 zugeordneten Halteprofilen 5 befestigt. Die Halteprofile 5 weisen in Profillängsrichtung eine Mehrzahl an Aufnahmen 6 für die Rohrleitung 3 auf, wobei je wenigstens zwei einem Wärmetauscher 2 zugeordnete Halteprofile 5 in einem Abstand A entlang der Rohrachse 4 vorgesehen sind, der von an den Halteprofilen 5 anschlagbaren Abstandshaltern 7 festgelegt ist.

Die Halteprofile 5 nehmen die Rohrleitung 3 schnappverschlussartig in den das Rohr 3 wenigstens um den halben Rohrmantelumfang umgreifenden Aufnahmen 6 auf. Zudem greifen auch die stabförmigen Abstandhalter 7 in Aufnahmen 6 schnappverschlussartig ein, wozu die Abstandshalter 7 der Aufnahme 6 zugeordnete Haltebereiche 8 aufweisen, die axial von Anschlägen 9 begrenzt sind, deren Außendurchmesser größer als der Aufnahmedurchmesser ist und deren Axialabstand a der Profilbreite entspricht.

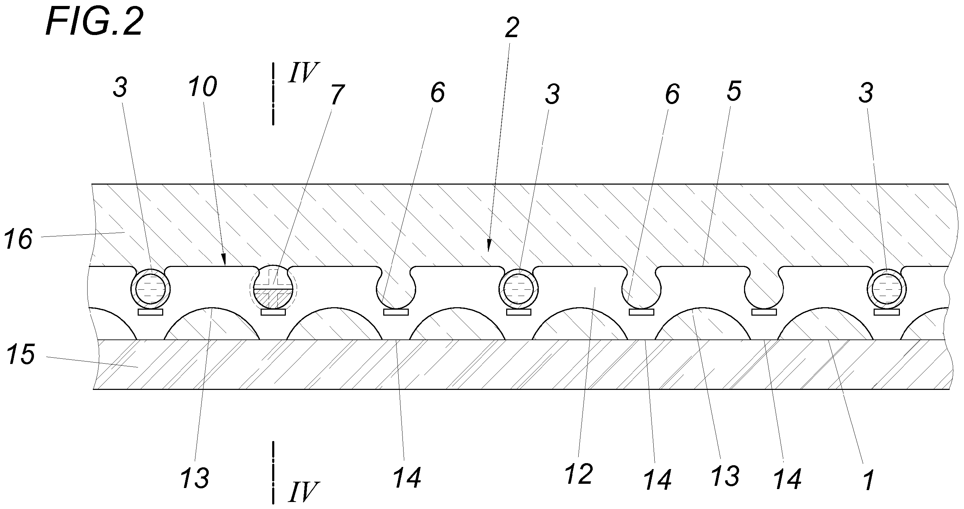

Im dargestellten Ausführungsbeispiel weisen die Halteprofile 5 einen C-profilförmigen Querschnitt auf, wobei der Rücken 10 der Halteprofile 5 im Bereich zwischen zwei benachbarten Aufnahmen 6 mit einer Freistellung 11 durchbrochen ist. Des Weiteren sind die Seitenschenkel 12 im Bereich zwischen zwei benachbarten Aufnahmen 6 zum Rücken 10 hin eingezogen. Wie insbesondere Fig. 2 zu entnehmen ist handelt es sich um einen bogenförmigen Einzug 13 zwischen je zwei Aufstandsflächen 14. Die Aufstandsflächen 14 liegen auf einer Schalung 15 auf, die nach dem Aushärten eines mineralischen Baustoffes in üblicher Weise von der Raumfläche 1 wieder abgenommen wird. Die Halteprofile 5 sorgen somit unter anderem auch dafür, dass der genaue erforderliche Abstand zwischen Raumfläche 1 und Rohrleitung, also die Einbautiefe, eingehalten wird. Die Freistellungen 11 und die Einzüge 13 sorgen dafür, dass die Halteprofile 5 sauber in den mineralischen Baustoff, beispielsweise Beton, ohne Lufteinschlüsse eingebettet werden kann. In Fig. 2 ist angededeutet, dass die Halteprofile 5 auf einer Schalung 15 aufliegen und in Beton 16 eingegossen sind. Die dargestellte Profilform erlaubt dabei eine saubere Umspülung von Halteprofilen 5 und Rohren 3. Die Schalung kann nach einem Aus-härten der Gussmasse in üblicher Weise entfernt und ggf. durch einen Verputz ersetzt werden.

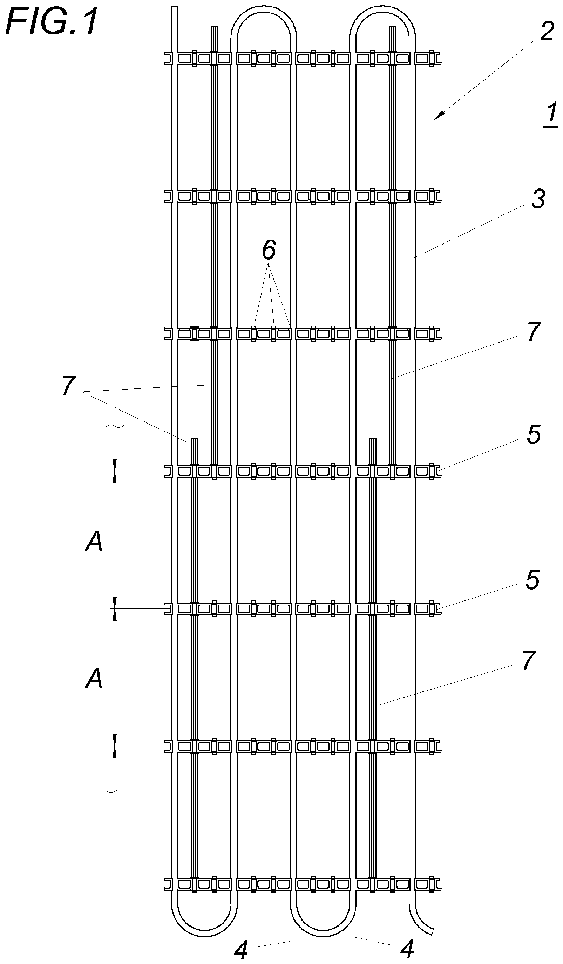

Gemäß Fig. 1 sind zwischen zwei Rohre 3 aufnehmenden Aufnahmen 6 an einem Halteprofil 5 zwei Aufnahmen 6 vorgesehen, in welche Abstandshalter 7 eingesetzt sind. Ein Abstandshalter 7 verbindet dabei mehrere Halteprofile, wobei die Abstandshalter 7 aneinander anschließender Halteprofilabschnitte zueinander um eben eine Aufnahme versetzt angeordnet sind.

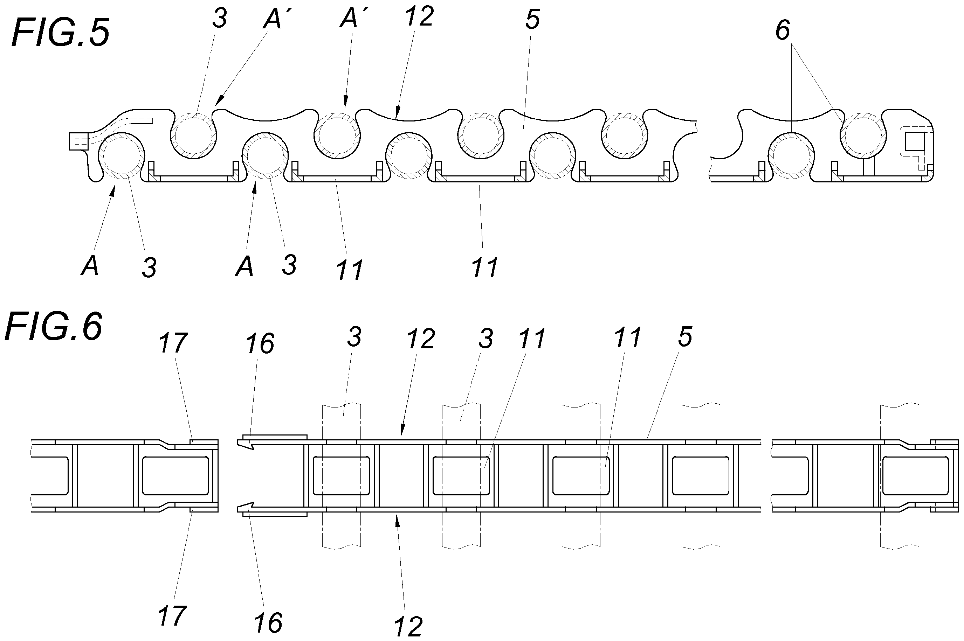

In der Ausführungsbeispielen nach den Fig. 5 und 6 sind die Aufnahmen 6 von Seitenschenkeln 12 des Halteprofils 5 ausgebildet, wobei in Profillängsrichtung benachbarte Aufnahmeöffnungen A, A' abwechselnd gegenüberliegenden Profilseiten zugeordnet sind. Somit eignet sich das erfindungsgemäße Halteprofil für den Einsatz bei Deckenkühlungen und bei Fußbodenheizungen gleichermaßen. Für die unterschiedlichen Anwendungsfälle ist das Halteprofil lediglich um 180° um die Schienenlängsachse zu drehen. Sind die Wärmetauscherrohre 3 in die Aufnahmen A' eingesetzt eignet sich das erfindungsgemäße Halteprofil 5 für den Einsatz bei Fußbodenheizungen. Sind die Wärmetauscherrohre 3 in die Aufnahmen A eingesetzt eignet sich das erfindungsgemäße Halteprofil 5 für den Einsatz bei Deckenkühlungen.

Zur Profilverlängerung weist Halteprofil 5 an seinen gegenüberliegenden Profilenden einerends Rastansätze 16 und anderends mit den Rastansätzen 16 zusammenwirkende Halteansätze 17 auf.

## Patentansprüche

1. Vorrichtung zum Klimatisieren eines Raumes mit wenigstens einem einer Raumfläche (1) zugeordneten, von einem Wärmeträgerfluid durchströmten, von einer Rohrleitung (3) gebildeten, Wärmetauscher (2), wobei die wenigstens eine Rohrleitung (3) an quer zur Rohrleitungsachse (4) ausgerichteten und der Raumfläche (1) zugeordneten Halteprofilen (5) befestigt ist, die in Profillängsrichtung eine Mehrzahl an Aufnahmen (6) für die die wenigstens eine Rohrleitung (3) aufweisen, und wobei je wenigstens zwei einem Wärmetauscher (2) zugeordnete Halteprofile (5) in einem Abstand (A) entlang der Rohrachse (4) vorgesehen sind, der von an den Halteprofilen (5) anschlagbaren Abstandshaltern (7) festgelegt ist, die in die Aufnahmen (6), vorzugsweise schnappverschlussartig, eingreifen, **dadurch gekennzeichnet, dass** die Abstandshalter (7) der Aufnahme (6) zugeordnete Haltebereiche (8) aufweisen, die axial von Anschlägen (9) begrenzt sind, deren Außendurchmesser größer als der Aufnahmedurchmesser ist und deren Axialabstand der Profilbreite (a) entspricht.

2. Vorrichtung nach Anspruch 1, **dadurch gekennzeichnet, dass** die Halteprofile (5) die Rohrleitung (3) schnappverschlussartig in den das Rohr (3) wenigstens um den halben Rohrmantelumfang umgreifenden Aufnahmen (6) aufnimmt.

3. Vorrichtung nach Anspruch 1 oder 2, **dadurch gekennzeichnet, dass** das Halteprofil (5) einen C-profilförmigen Querschnitt aufweist, dessen Rückenschenkel (10) im Bereich zwischen zwei benachbarten Aufnahmen (6) durchbrochen ist.

4. Vorrichtung nach einem der Ansprüche 1 bis 3, **dadurch gekennzeichnet, dass** das Halteprofil (5) einen C-profilförmigen Querschnitt aufweist, dessen Seitenschenkel (12) im Bereich zwischen zwei benachbarten Aufnahmen (6) zum Rückenschenkel (10) hin eingezogen sind.

5. Vorrichtung nach einem der Ansprüche 1 bis 4, **dadurch gekennzeichnet, dass** zwischen zwei Rohre (3) aufnehmenden Aufnahmen (6) an einem Halteprofil (5) wenigstens zwei Aufnahmen (6) vorgesehen sind, in welche Abstandshalter (7) eingesetzt sind.

6. Vorrichtung nach einem der Ansprüche 1 bis 5, **dadurch gekennzeichnet, dass** die Aufnahmen (6) von Seitenschenkeln (12) des Halteprofils (5) ausgebildet sind, wobei in Profillängsrichtung benachbarte Aufnahmeöffnungen (A, A') abwechselnd gegenüberliegenden Profilseiten zugeordnet sind.

7. Vorrichtung nach einem der Ansprüche 1 bis 6, **dadurch gekennzeichnet, dass** Halteprofil (5) zur Profilverlängerung an seinen gegenüberliegenden Profilenden einerends Rastansätze (16) und anderends mit den Rastansätzen (16) zusammenwirkende Halteansätze (17) aufweist.

## Claims

1. Device for air-conditioning a room having at least one heat exchanger (2) which is allocated to a room surface (1), has a heat transfer fluid flowing through it and is formed by a pipeline (3), wherein the at least one pipeline (3) is fastened to holding profiles (5) orientated transversely to the pipeline axis (4) and allocated to the room surface (1), these holding profiles comprising, in the profile longitudinal direction, a plurality of receivers (6) for the at least one pipeline (3), and wherein each at least two holding profiles (5) allocated to a heat exchanger (2) are provided at a distance (A) along the pipe axis (4), which distance is fixed by spacers (7) which can be attached to the holding profiles (5) and which engage in the receivers (6), preferably in a snap-fit manner, **characterised in that** the spacers (7) comprise holding regions (8) allocated to the receiver (6) and defined axially by stops (9), the outer diameter of which is larger than the receiver diameter and the axial spacing of which corresponds to the profile width (a).

2. Device as claimed in claim 1, **characterised in that** the holding profile (5) receives the pipeline (3) in a snap-fit manner in the receivers (6) encompassing the pipe (3) at least around half the pipe surface periphery.

3. Device as claimed in claim 1 or 2, **characterised in that** the holding profile (5) has a C-profile-shaped cross-section, the rear limb (10) of which is pierced in the region between two adjacent receivers (6).

4. Device as claimed in any one of claims 1 to 3, **characterised in that** the holding profile (5) has a C-profile-shaped cross-section, the side limb (12) of which is retracted towards the rear limb (10) in the region between two adjacent receivers (6).

5. Device as claimed in any one of claims 1 to 4, **characterised in that** between two receivers (6) receiving pipes (3), at least two receivers (6) in which spacers (7) are inserted are provided on one holding profile (5).

6. Device as claimed in any one of claims 1 to 5, **characterised in that** the receivers (6) are formed by side limbs (12) of the holding profile (5), wherein receiver openings (A, A') adjacent to each other in the profile longitudinal direction are alternately allocated opposing profile sides.

7. Device as claimed in any one of claims 1 to 6, **characterised in that**, for profile extension, the holding profile (5) comprises, at its opposite profile ends, on one end, latching projections (16) and, on the other end, holding projections (17) cooperating with the latching projections (16).

## Revendications

1. Dispositif pour climatiser une pièce avec au moins un échangeur de chaleur (2) constitué par un conduit (3) traversé par un fluide caloporteur et associé à une surface (1), dans lequel l'au moins un conduit (3) est fixé à des profilés de support (5) orientés perpendiculairement à l'axe (4) du conduit et associés à la surface (1), qui présentent dans leur sens longitudinal une multitude de logements (6) pour l'au moins un conduit (3), et dans lequel au moins deux profilés de support (5) associés à un échangeur de chaleur (2) sont prévus à une distance (A) le long de l'axe (4) du conduit qui est déterminée par des écarteurs (7) pouvant être accrochés sur les profilés de support (5) qui se fixent dans les logements (6), de préférence par un mécanisme d'encliquetage, **caractérisé en ce que** les écarteurs (7) présentent des zones de support (8) associées aux logements (6) qui sont limitées axialement par des butées (9) dont le diamètre extérieur est supérieur au diamètre des logements et dont la distance axiale correspond à la largeur (a) des profilés.

2. Dispositif selon la revendication 1, **caractérisé en ce que** le profilé de support (5) reçoit le conduit (3) par le biais d'un mécanisme d'encliquetage dans les logements (6) entourant le conduit (3) au moins sur la moitié de la périphérie de sa gaine.

3. Dispositif selon la revendication 1 ou 2, **caractérisé en ce que** le profilé de support (5) présente une section transversale en forme de C dont la patte arrière (10) est rompue dans la zone entre deux logements (6) voisins.

4. Dispositif selon une des revendications 1 à 3, **caractérisé en ce que** le profilé de support (5) présente une section transversale en forme de C dont les pattes latérales (12) sont rentrées en direction de la patte arrière (10) dans la zone entre deux logements (6) voisins.

5. Dispositif selon une des revendications 1 à 4, **caractérisé en ce qu'**entre deux logements (6) recevant des conduits (3) sur un profilé de support (5) sont prévus au moins deux logements (6) dans lesquels des écarteurs (7) sont insérés.

6. Dispositif selon une des revendications 1 à 5, **caractérisé en ce que** les logements (6) sont formés par les pattes latérales (12) du profilé de support (5), des orifices de réception voisins (A, A') étant associés alternativement, dans le sens longitudinal des profilés, à des faces de profilés opposées.

7. Dispositif selon une des revendications 1 à 6, **caractérisé en ce que** le profilé de support (5) possède, pour pouvoir être prolongé, à ses extrémités opposées d'un côté des pattes d'encliquetage (16) et de l'autre côté des pattes de maintien (17) collaborant avec les pattes d'encliquetage (16).
